# NEUE EUROPÄISCHE PATENTSCHRIFT

(11) **EP 0 890 961 B2**
(45) Veröffentlichungstag und Bekanntmachung des Hinweises auf die Entscheidung über den Einspruch: **21.07.2010**
(45) Hinweis auf die Patenterteilung: 24.11.2004
(21) Anmeldenummer: 98401527.1
(22) Anmeldetag: 22.06.1998
(51) Int. Cl.: H01B 7/28

(54) **Elektrisches Kabel**
Electric cable
Câble électrique

(30) Priorität: 10.07.1997 DE 19729646
(43) Veröffentlichungstag der Anmeldung: 13.01.1999
(73) Patentinhaber: Nexans, 75008 Paris (FR)
(72) Erfinder: Schädlich, Hans, Dipl.-Ing., 30179 Hannover (DE); Rosebrock, Wilfried, Dipl.-Ing., 29699 Bomlitz (DE); Klass, Joachim, Dipl.-Ing., 31655 Stadthagen (DE)
(74) Vertreter: Döring, Roger

(56) Entgegenhaltungen:
- EP-A- 0 700 057
- EP-A- 0 802 542
- DE-A- 2 719 094
- DE-A- 4 306 835
- DE-A- 4 417 143
- DE-U- 9 208 213
- GERD HAHNE UND HANNEMARIE KOBER: ' Neuzeitliche Konstruktionen von Energiekabeln' ELEKTRIZITÄTSWIRTSCHAFT 80 Bd. 7, KÖLN-MÜLHEIM (1981), Seite 222-225
- HELMUT WICHMANN (1981): 'Einfluss der Betriebserfahrungen auf den Aufbau Kunststoffisolierter 10-bis 30 kV-Kabel und deren Garnituren für EVU-Netze' ELEKTRIZITÄTSWIRTSCHAFT Bd. 26, Nr. 80, Seite 955-961

## Beschreibung

Die Erfindung betrifft ein elektrisches Kabel gemäß dem Oberbegriff des Patentanspruchs 1. Ein solches Kabel geht aus der DE 44 17 143 A1 hervor.

Um bei solchen elektrischen Kabeln zu verhindern, daß Wasser oder andere Flüssigkeiten durch eine Beschädigung des Außenmantels in das Kabel eindringen und sich im Bereich des elektrischen Schirms zwischen den Kupferdrähten oder -bändern in Längsrichtung des Kabels über größere Längen ausbreiten können, wird insbesondere bei der Verlegung der Kabel unter erschwerten Bedingungen, wie z. B. durch Gewässer, bei großen Höhenunterschieden oder bei besonderer Gefährdung des Außenmantels, eine möglichst gute Längswasserdichtheit im Schirmbereich gefordert. Zu diesem Zweck sind bereits verschiedene Möglichkeiten, wie die Anordnung von bei Feuchtigkeitseinwirkung quellenden Materialien im Bereich des Schirms des elektrischen Kabels, bekannt. Bei einem Feuchtigkeitseinbruch in das Kabel quellen diese Materialien auf, so daß sie im Schirmbereich vorhandene Hohlräume und Spalten ausfüllen und eindringende Flüssigkeiten sich nur begrenzt in Längsrichtung des Kabels ausbreiten können.

In der EP 0 391 012 B1 ist ein elektrisches Kabel beschrieben, bei dem auf den aus Drähten gebildeten elektrischen Schirm ein Innenmantel aus einer Quellmittel enthaltenden, nicht-vulkanisierten Gummimischung aufextrudiert ist. Der Einsatz dieser Mischung soll es ermöglichen, auf die bisher übliche Spaltabdichtung zwischen dem Gummiinnenmantel und der äußeren Leitschicht des Kabels zu verzichten, da in das Kabel eingedrungenes Wasser im Grenzbereich zwischen elektrischer Ader und Innenmantel durch den Zusatz des Quellmittels zu der Mischung des Innenmantels abgeblockt wird.

Dieses bekannte elektrische Kabel hat aber den Nachteil, daß zusätzlich zu dem extrudierten Außenmantel noch ein extrudierter Innenmantel erforderlich ist. Dies führt zu einer aufwendigen Herstellung und zu hohen Herstellkosten. Zudem lassen sich der Außenmantel und der Innenmantel des Kabels nur schlecht voneinander trennen, so daß ein späteres Recycling des Mantels erschwert wird. Die Einbettung der Schirmdrähte in den Innenmantel behindert die Montage des Kabels.

Aus der eingangs erwähnten DE 44 17 143 A1 geht ein kunststoffisoliertes Starkstromkabel mit einem isolierten Leiter und einer äußeren Leitschicht hervor, das außerdem einen Kupferdrähte aufweisenden Schirm, eine denselben umgebende Trennschicht und einen aus Kunststoff bestehenden Außenmantel hat. Um den Schirm gegebenenfalls in Längsrichtung des Kabels gegen das Vordringen von Feuchtigkeit abzudichten, ist zwischen äußerer Leitschicht und Schirm eine Polsterschicht angebracht, die aus einem mit bei Feuchtigkeitszutritt quellenden Material beschichteten Band besteht. Die über dem Schirm liegende Trennschicht ist genauso wie die Polsterschicht aufgebaut.

Ausgehend von diesem Stand der Technik liegt der vorliegenden Erfindung das Problem zugrunde, ein längswasserdichtes elektrisches Kabel zu schaffen, das sich auf einfache und kostengünstige Weise herstellen läßt und einfach montiert werden kann.

Dieses Problem wird gemäß dem kennzeichnenden Merkmal des Patentanspruchs 1 gelöst.

Die durch die Erfindung erzielbaren Vorteile bestehen insbesondere darin, daß das längswasserdichte elektrische Kabel durch die Verwendung von Quellbändern und Kreppapier anstelle von speziellen extrudierten Mischungen besonders einfach und kostengünstig herstellbar ist. Das unterhalb des Schirms angeordnete Quellband gewährleistet gemeinsam mit der oberhalb des Schirms angebrachten Lage aus bei Feuchtigkeitseinwirkung in geringem Maße quellenden Kreppapier bei einem Feuchtigkeitseinbruch in das Kabel durch das Aufquellen von Quellmaterial und Kreppapier und das Ausfüllen von im Schirmbereich vorhandenen Hohlräumen und Spalten eine sehr gute Abdichtung im Schirmbereich und auf diese Weise eine gute Längswasserdichtheit des Kabels. Es eignet sich daher z. B. auch zur Verlegung in feuchten Böden, Gewässern oder in Trassen mit großen Höhenunterschieden, ohne daß zusätzliche Maßnahmen erforderlich wären. Das die Trennschicht bildende, als geschlossene Lage aufgebrachte Kreppapier ist preiswert und bis zu Temperaturen von mehr als 250 °C beständig. Bei der Extrusion des Außenmantels dient es auch als thermisches Polster und dringt in die zwischen den Kupferdrähten oder -bändern vorhandenen Zwischenräume ein, wo durch die Längswasserdichtigkeit des Schirmbereichs zusätzlich verbessert wird. Am Ende der Nutzungszeit des elektrischen Kabels läßt sich der Außenmantel aufgrund der Trennschicht aus Kreppapier problemlos vom übrigen Kabelaufbau lösen und einem Recycling zuführen, da die Schirmdrähte nicht unmittelbar von Mantelmaterial umschlossen sind. Das Kabel läßt sich darüber hinaus einfach montieren, da nur wenige Schichten zum Absetzen des Kabelendes entfernt werden müssen und sich das Quellband der Polsterschicht und das Kreppapier der Trennschicht zudem vergleichsweise einfach entfernen lassen.

Durch die in den Unteransprüchen aufgeführten Merkmale sind vorteilhafte Weiterbildungen und Verbesserungen der Erfindung möglich.

Um eine besonders gute Längswasserdichtheit des erfindungsgemäßen elektrischen Kabels zu gewährleisten und darüber hinaus eine einfache und kontinuierliche Herstellung großer Längen des Kabels zu ermöglichen, ist es von Vorteil, wenn die oberhalb des Schirms vorgesehene Trennschicht durch zumindest zwei parallel zueinander mit überlappenden Bandkanten um den Schirm gewickelte Kreppapierbänder ausgebildet ist. Dabei überlappen sich die über dem Schirm nebeneinander liegenden Bänder jeweils dachziegelartig.

Für eine kontinuierliche Herstellung großer Längen des erfindungsgemäßen elektrischen Kabels, also um große Lauflängen des Kabels zu erreichen, ist es ebenfalls von Vorteil, wenn die Trennschicht durch wenigstens ein in Längsrichtung um den Schirm herumgelegtes Kreppapierband ausgebildet ist. Zur Sicherstellung der Längswasserdichtheit sollten sich dabei die Längskanten des Kreppapierbandes überlappen.

Vorteilhaft ist es, wenn zwischen der Trennschicht aus Kreppapier und dem Außenmantel eine durch eine Kunststoffolie gebildete Zwischenschicht vorgesehen ist. Diese Kunststoffolie kann mit sich überlappenden Bandkanten auf die Trennschicht gewickelt oder längseinlaufend mit sich überlappenden Bandkanten auf die Trennschicht gelegt sein und besteht vorteilhafterweise aus Polyester oder Polyethylen. Eine geeignete Polyesterfolie ist z. B. unter dem Handelsnamen "Hostaphan" erhältlich. Die Kunststoffolie verhindert ein ansonsten unter Umständen auftretendes Verkleben von Trennschicht und Außenmantel, das ein späteres Trennen der Werkstoffe des Kabels zum Zwecke des Recyclings erschweren würde.

Als Werkstoff für die die Zwischenschicht bildende Kunststoffolie eignen sich Polyethylenterephthalat oder Polybutylenterephthalat, die preiswert erhältlich sind, eine hohe Temperaturfestigkeit und chemische Beständigkeit sowie ein gutes Gleitverhalten aufweisen, ein Verkleben von Trennschicht und Außenmantel verhindern und ein einfaches Entfernen des Außenmantels ermöglichen.

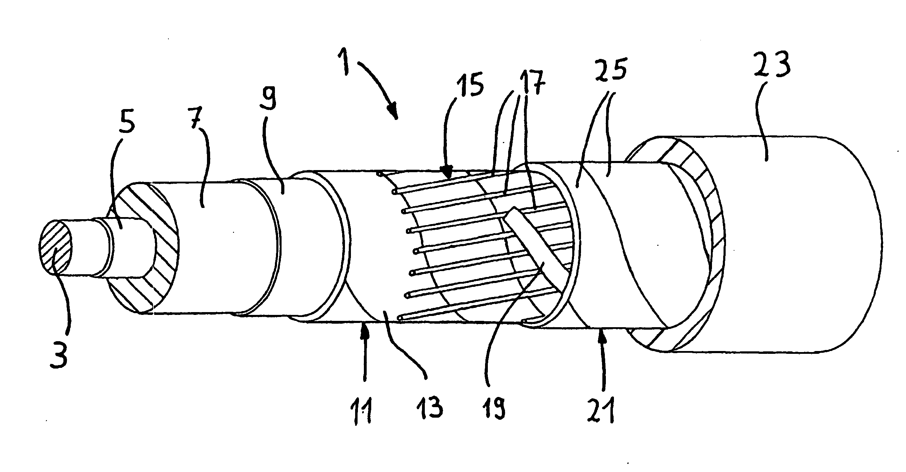

Ein Ausführungsbeispiel der Erfindung ist in der Zeichnung vereinfacht dargestellt und in der nachfolgenden Beschreibung näher erläutert.

Bei dem in der Zeichnung beispielhaft dargestellten längswasserdichten elektrischen Kabel 1 handelt es sich um ein einadriges Mittel- oder Hochspannungskabel mit einem elektrischen Leiter 3, der von einer inneren Leitschicht 5 umschlossen ist. Die innere Leitschicht 5 dient dazu, das elektrische Feld an der Oberfläche des elektrischen Leiters 3 zu homogenisieren und die Entstehung von Teilentladungen zu verhindern. Über der inneren Leitschicht 5 ist eine elektrische Isolierung 7 aus einem Kunststoff vorgesehen, die ihrerseits von einer lokale Feldstärkeüberhöhungen vermeidenden äußeren Leitschicht 9 umschlossen ist.

Über der äußeren Leitschicht 9 ist eine elektrisch leitfähige Polsterschicht 11 vorgesehen, die aus einem bei Feuchtigkeitseinwirkung quellende Materialien enthaltenden, auf die äußere Leitschicht 9 gewickelten leitfähigen Quellband 13 gebildet ist. Das Quellband 13 kann aber auch in Längsrichtung um die äußere Leitschicht 9 herumgelegt sein. Bei dem Quellband 13 handelt es sich z. B. um ein sogenanntes Quellvlies, das unter Einfluß von Feuchtigkeit dermaßen aufquillt, daß Hohlräume im Kabelaufbau abgeschlossen und die Feuchtigkeitswanderung in Längsrichtung des elektrischen Kabels 1 verhindert wird. Für eine besonders sichere Abdichtung des Kabels 1 gegen in Längsrichtung wandernde Feuchtigkeit ist es dabei von Vorteil, wenn die Polsterschicht 11 durch eine geschlossene Lage aus einem Quellband 13 oder mehreren Quellbändern 13 gebildet ist, die in sich an ihren Bandkanten überlappender Weise um die äußere Leitschicht 9 gewickelt bzw. herumgelegt sind.

Über der Polsterschicht 11 ist ein elektrischer Schirm 15, beispielsweise aus Kupferdrähten 17 und einer Querleitwendel 19 aufgebracht. Der Schirm 15 dient als Berührungsschutz und zum Leiten von Ableit- und Erdschlußströmen. Die elektrische Leitfähigkeit des die Polsterschicht 11 bildenden Quellbandes 13 gewährleistet über die gesamte Länge des Kabels 1 einen guten elektrischen Kontakt zwischen dem Schirm 15 und der äußeren Leitschicht 9, so daß elektrische Potentialdifferenzen zwischen Schirm 15 und äußerer Leitschicht 9 vermieden werden. Die Polsterschicht 11 schützt zudem die äußere Leitschicht 9 und die darunter liegende Isolierung 7 vor mechanischen Beschädigungen durch von außen auf das Kabel 1 wirkende Kräfte.

Über dem Schirm 15 ist eine geschlossene Trennschicht 21 aus Kreppapier vorgesehen, die von einem Außenmantel 23 aus Kunststoff umschlossen ist. Die Trennschicht 21 ist beispielsweise durch zwei parallel zueinander dachziegelartig mit überlappenden Bandkanten um den Schirm 15 gewickelte Bänder 25 aus Kreppapier gebildet, die den Schirm 15 vollständig bedecken. Sie kann aber z. B. auch durch wenigstens ein in Längsrichtung mit Überlappung um den Schirm 15 herumgelegtes Band 25 aus Kreppapier gebildet sein, was ebenso wie das parallele Wickeln mehrerer Bänder die kontinuierliche Herstellung großer Kabellängen vereinfacht. Möglich sind auch mehrere übereinander liegende Kreppapier-Lagen. Tritt in den Bereich des Schirms 15 Feuchtigkeit ein, so quellen das Quellband 13 und in geringerem Maße die Bänder 25 aus Kreppapier auf und verhindern auf diese Weise zuverlässig ein Weiterwandern der Feuchtigkeit im Bereich des Schirms 15 in Längsrichtung des Kabels 1.

## Patentansprüche

1. Elektrisches Kabel, insbesondere Mittelspannungs- oder Hochspannungskabel, mit zumindest einem eine elektrische Isolierung und eine darüber liegende äußere Leitschicht aufweisenden elektrischen Leiter, einer die äußere Leitschicht umgebenden, elektrisch leitfähigen Polsterschicht aus einem bei Feuchtigkeitseinwirkung quellende Materialien enthaltenden Quellband, einem darüber angeordneten elektrischen Schirm aus Kupferdrähten und einer Querleitwendel einer oberhalb des Schirms angeordneten, Kreppapier enthaltenden und bei Feuchtigkeitseinwirkung quellenden Trennschicht und einem aus Kunststoff bestehenden Außenmantel, **dadurch gekennzeichnet, daß** die Trennschicht (21) aus einer geschlossenen Lage aus bei Feuchtigkeitseinwirkung in geringerem Maße als das Quellband (13) quellendem Kreppapier besteht, die bei einem Feuchtigkeitseinbruch in das Kabel gemeinsam mit dem unterhalb des Schirms (15) angeordneten Quellband (13) durch das Aufquellen von Quellmaterial und Kreppapier eine Abdichtung im Schirmbereich und eine Längswasserdichtheit des Kabels gewährleistet.

2. Elektrisches Kabel nach Anspruch 1, **dadurch gekennzeichnet, daß** die Trennschicht (21) aus mindestens zwei parallel zueinander mit überlappenden Bandkanten um den Schirm (15) gewickelten Bändern (25) aus Kreppapier besteht.

3. Elektrisches Kabel nach Anspruch 1 oder 2, **dadurch gekennzeichnet, daß** zwischen der Trennschicht (21) und dem Außenmantel (23) eine Zwischenschicht vorgesehen ist.

4. Elektrisches Kabel nach Anspruch 3, **dadurch gekennzeichnet, daß** die Zwischenschicht eine Kunststoffolie ist.

5. Elektrisches Kabel nach Anspruch 3 oder 4, **dadurch gekennzeichnet, daß** die Zwischenschicht eine Polyesterfolie ist.

## Claims

1. Electricalcable, in particular a medium-voltage cable ora high-voltage cable, with atleastone electrical conductor, which is surrounded by an electrical insulation and an outer semiconductive layer arranged around the same, an electrically conductive bedding layer which surrounds the outer semiconductive layer consisting of a swelling ribbon which contains materials that swell up when coming into contact with moisture , an electrical screen surrounding the bedding layer; comprising copper wires and a counter helix, a separating layer which surrounds the screen comprising crepe-paperand which swells when coming into contact with moisture, and an outersheath of plastic, **characterized in that** the separating layer (21) consists of one closed layer of crepe-paper which swells when coming into contact with moisture less than the swelling ribbon (13), which separating layer(21) together with the swelling ribbon (13) which is positioned underneath the screen (15) causes a sealing within the area of the screen and guarantees a sealing in longitudinal direction of the cable, when moisture has entered the cable due to the swelling ofswelling material and crepe-paper.

2. Electrical cable according to claim 1, **characterized in that** the separation layer(21) comprises at least two parallel crepe-paper ribbons (25), which are wound around the screen (15) with overlapping edges.

3. Electrical cable according to claim 1 or 2, **characterized in that** an intermediate layer is provided between the separation layer (21) and the outer sheath (23).

4. Electrical cable according to claim 3, **characterized in that** the intermediate layeris a plastic foil.

5. Electrical cable according to claim 3 or 4, **characterized in that** the intermediate layerisa polyester foil.

## Revendications

1. Câble électrique, en particulier câble à moyenne tension ou à haute tension, avec au moins un conducteur électrique entouré parune isolation électrique et une couche conductrice extérieure recouvrante, une couche de rembourrage électriquement conductrice entourant la couche conductrice extérieure et composée d'une bande gonflante contenant des matières gonflant sous l'effet de l'humidité, un blindage électrique disposé au-dessus de celle-ci et composé de fils de cuivre et d'une hélice de direction opposée, une couche de séparation disposée au-dessus du blindage contenant du papier-crêpe etgonflantsous l'humidité etune gaine extérieure en matière plastique, **caractérisé en ce que** la couche de séparation (21) se compose d'une couche scellée en papier-crêpe gonflant sous l'effet de l'humidité dans une moindre mesure que la bande gonflant (13) et qui, en cas de pénétrationd'humidité dans le câble, assure enconjonction avec la bande gonflant (13) disposée au-dessous du blindage (15) une étanchéité au niveau du blindage etune étanchéité à l'eau s'écoulant dans le sens longitudinal du câble, grâce au gonflage des matières gonflantes et du papier-crêpe.

2. Câble électrique selon la revendication 1, **caractérise en ce que** la couche de séparation (21) se compose d'au moins deux bandes de papier-crêpe (25) enroulées en parallèle l'une à l'autre autour du blindage (15) avec des bords de bande se chevauchent.

3. Câble électrique selon la revendication 1 ou 2, **caractérise en ce qu'**entre la couche de séparation (21) et la gaine extérieure (23) une couche intermédiaire est prévue.

4. Câble électrique selon la revendication 3, **caractérise en ce que** la couche intermédiaire est un film de matière plastique.

5. Câble électrique selon la revendication 3 ou 4, **caractérise en ce que** la couche intermédiaire est un film polyester.
